(19) 

**Europäisches Patentamt**
**European Patent Office**
**Office européen des brevets**

(11) **EP 1 930 815 A1**

(12) **EUROPEAN PATENT APPLICATION**

(43) Date of publication:
**11.06.2008 Bulletin 2008/24**

(51) Int Cl.:
**G06F 17/30** (2006.01)

(21) Application number: **06301219.9**

(22) Date of filing: **06.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thomson Licensing**
**92100 Boulogne Billancourt (FR)**

(72) Inventors:
• **Stauder, Jürgen**
  **BOULOGNE CEDEX 92648 (FR)**
• **Sirot, Joël**
  **BOULOGNE CEDEX 92648 (FR)**
• **Schmouker, Philippe**
  **BOULOGNE CEDEX 92648 (FR)**

(74) Representative: **Huchet, Anne**
  **46, Quai Alphonse Le Gallo**
  **92100 Boulogne Billancourt (FR)**

(54) **Method for establishing a best graph for the classification of video or audio data**

(57)    The invention concerns a method for establishing a best graph for the classification of video data or audio data, the graph comprising a number of nodes, each associated with one concept, each data associated with metadata representing at least ground truth information associated with each concept, comprising the steps of
- establishing a plurality of graphs by arranging the orders of the nodes differently in each graph,
- classifying automatically each data in each graph,
- determining a performance for each graph by comparing the ground truth information and the classification.

FIG 2

**EP 1 930 815 A1**

**Description**

The invention concerns a method for establishing a best graph for the classification of images.

In various fields of signal and data processing, classification methods are used to classify multimedia data into different classes or clusters.

For instance, images belonging to a personal collection can be classified into classes such as indoor scenes, city scenes, and sunset scenes, to enhance a database organization. The classes correspond to semantic concepts.

In order to classify the images, efficient detectors have to be determined in order to detect the presence of a concept in an image. Descriptors are calculated using image or audio processing methods. For instance by using audio frequency descriptors, audio speed descriptors, image color descriptors, image texture descriptors and video motion descriptors.

Descriptors are then classified into two classes, one corresponding to the presence of the concept, the other to the absence of the concept. Such classification methods are often supervised. In this case, two learning sets of multimedia items are used. A first, positive set contains items where the concept is present. A second set, negative set, contains items where the concept is absent.

The semantic concepts have often semantic relation ships, represented by ontology. For personal photographs, for example, the sunset concept may coexist with the city concept in the same image, a sunset in the city for instance. But the sunset cannot coexist with the indoor scenes concept in the same image.

The detection of semantic concepts from descriptors on signal processing level is a difficult problem. Often two images have very close descriptors but are semantically different. For example, indoor images have often similar red colors as sunset images. Another example is an allegro peace of classical music having a similar speed descriptor to a hard rock song.

One problem to be solved is the order in which the descriptors have to be executed on the different items of the database and how to make use of the semantic relationship between concepts.

Indeed, different orders for applying the descriptors on the different items can lead to a more or less good classification of the multimedia items. The order of applying the descriptors is therefore important to obtain an appropriate classification of the different multimedia items.

The invention concerns a method for establishing a best graph for the classification of video data or audio data, the graph comprising a number of nodes, each associated with one concept, each data associated with metadata representing at least ground truth information associated with each concept. According to the invention, the method comprises the steps of

- establishing a plurality of graphs by arranging the orders of the nodes differently in each graph,
- classifying automatically each data in each graph,
- determining a performance for each graph by comparing the ground truth information and the classification.

According to a preferred embodiment, it further comprises the step of creating a detector for each node, enabling to detect the presence or the absence of the concept associated with said node,

According to a preferred embodiment it further comprises the steps of

- creating a learning set of data for each node, each learning set comprises a positive learning set and negative learning set, the positive learning set comprising data comprising the concept and the negative learning set comprising data which do not comprise said concept,
- creating a verification set of data for each node, comprising data distinct from the data of the learning set, each verification set comprises a positive verification set and negative verification set, the positive verification set comprising data comprising the concept and the negative verification set comprising data which do not comprise said concept,

According to a preferred embodiment the method comprises the steps of calculating for each data of the learning sets and of the verification sets, a descriptor representative of the content of the data and chosen among:

- a color histogram,
- a dominant color
- textu re,
- contour direction histograms,
- rhythm,
- mood,

and a combination of any of these features.

According to a preferred embodiment the method comprises a step of determining a set of representative descriptors for each learning set.

According to a preferred embodiment the method comprises

- a step of comparing, for each node, the descriptors of each data of the node associated verification set to the set of representative descriptors associated with the positive and negative learning set of said node.
- a step of classifying each data as belonging to a positive verification set or to a negative verification set according to the comparison.

According to a preferred embodiment the method comprises a step of evaluating the performance of each graph by comparing the classification obtained into positive and negative verification sets for each node and the ground truth information associated with each node.

Other characteristics and advantages of the invention will appear through the description of a non-limiting embodiment of the invention, which will be illustrated, with the help of the enclosed drawings.

- Figures 1a and 1b represent examples of graphs established according to an embodiment of the invention,
- Figure 2 represents a flow-chart of an embodiment of a method according to a preferred embodiment of the invention.

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.

Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.

Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.

In the following detailed description of the embodiments, reference is made to the accompanying drawings that show, by way of illustration, specific embodiments in which the invention may be practices. In the drawings, numbers describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

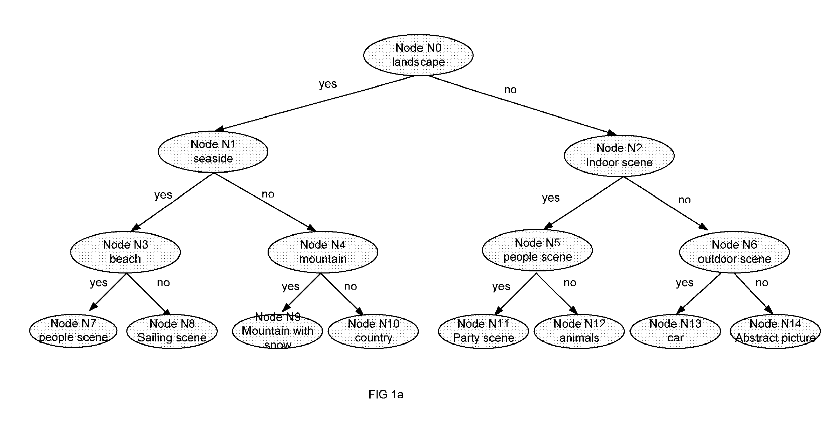

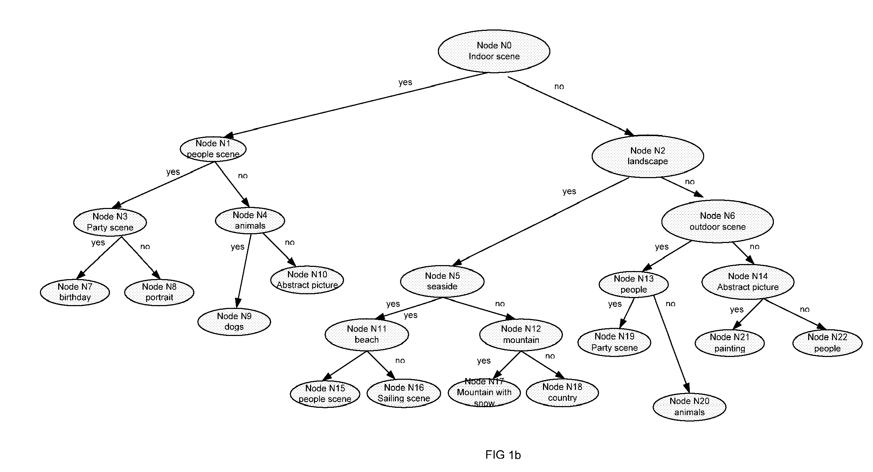

Figures 1a and 1b give examples of graphs that can be established according to the invention.

A set of concepts is chosen which are representative of the content of the images to be classified. The concepts depend on the application. An example is personal photographs. In the state of the art literature on consumer behavior such as the paper of K. Rodden entitled "How do people organize their photographs" published in 1999 in the proceedings of the BCS IRSG 21st Annual Colloquium on Information Retrieval Research as well as in technical papers on image classification such as the paper of A. Vailaya et al. entitled "Content-based hierarchical classification of vacation images" published in 1999 in the Proceedings of the IEEE international conference on Multimedia Computing and Systems propose concepts such as "indoor", "outdoor", "people" and "nature". In case of an application on arts images the concepts can include "wooden sculpture", "metallic sculpture" and "painting". The concepts have to be chosen thoroughly since images which do not belong to any concept are often associated to not appropriate concepts.

As shown on figures 1a and 1b, with the same set of concepts, different graphs can be established, according to the association of a concept with a node.

The invention proposes therefore a method and a device that enables to find the best association of a concept with a node, and enables to decide if the graph shown on figure 1a provides better or worst results than the graph shown on figure 1b. This means that the different descriptors are tested according to different orders in the graphs and this can lead to very different results for the classification of the multimedia items.

On figure 1a, node N0 is associated with the concept "landscape". Each image of the database is first tested in order to determine if this image is representative of a landscape. If yes, then the image is sent to node N1. If no, then this image is sent to the node N2. The decision of presence or absence of the concept in the image is called the concept decision. Node N1 is associated with the concept "seaside, node N2 is associated with the concept "indoor scene".

If the image has been sent to node N1; the image is tested to determine if it is representative of the seaside. If yes, this image is sent to next node N3. If no, this image is sent to next node N4. Node N4 is associated with the concept "mountain" and node N3 is associated with the concept "beach".

If the image has been sent to node N2, the image is tested to determine if it is representative of an indoor scene. If yes, this image is sent to the next node N5, otherwise this image is transferred to node N6. Node N5 is associated with the concept "people scene" and node N6 is associated with the concept "outdoor scene".

If the image has been sent to node N3, the image is tested to determine if it is representative of a beach scene. If yes, this image is sent to the next node N7, otherwise this image is transferred to node N8. Node N7 is associated with the concept "people scene" and node N8 is associated with the concept "sailing scene".

If the image has been sent to node N4, the image is tested to determine if it is representative of a mountain scene. If yes, the image is sent to node N9, otherwise this image is transferred to node N10. Node N9 is associated with the concept "mountain with snow" and node N10 is associated with the concept "country".

If the image has been sent to node N5, the image is tested to determine if it is representative of a people scene. If yes, the image is sent to node N11, otherwise this image is transferred to node N12. Node N11 is associated with the concept "party scene" and node N12 is associated with the concept "animals".

If the image has been sent to node N6, the image is tested to determine if it is representative of an outdoor scene. If yes, the image is sent to node N13, otherwise this image is transferred to node N14. Node N13 is associated with the concept "car" and node N14 is associated with the concept "abstract picture".

If the image has been sent to node N7, the image is tested to determine if it is representative of a people scene.

If the image has been sent to node N8, the image is tested to determine if it is representative of a sailing scene.

If the image has been sent to node N9, the image is tested to determine if it is representative of a mountain with snow scene.

If the image has been sent to node N10, the image is tested to determine if it is representative of a country scene.

If the image has been sent to node N11, the image is tested to determine if it is representative of a party scene.

If the image has been sent to node N12, the image is tested to determine if it is representative of an animals scene.

If the image has been sent to node N13, the image is tested to determine if it is representative of a car scene.

If the image has been sent to node N14, the image is tested to determine if it is representative of an abstract picture scene.

On figure 1b, a second embodiment of a graph comprising most of the concepts of figure 1a is represented. The parent node N0 is associated with the concept "Indoor scene". Each image of the database is first tested in order to determine if this image is representative of an indoor scene. If yes, then the image is sent to node N1. If no, then this image is sent to the node N2. Node N1 is associated with the concept "people scene", node N2 is associated with the concept "landscape".

If the image has been sent to node N1, the image is tested to determine if it is representative of a people scene. If yes, this image is sent to next node N3. If no, this image is sent to next node N4. Node N3 is associated with the concept "party scene" and node N4 is associated with the concept "animals".

If the image has been sent to node N2, the image is tested to determine if it is representative of a lanscape. If yes, this image is sent to the next node N5, otherwise this image is transferred to node N6. Node N5 is associated with the concept "seaside" and node N6 is associated with the concept "outdoor scene".

If the image has been sent to node N3, the image is tested to determine if it is representative of a party scene. If yes, this image is sent to the next node N7, otherwise this image is transferred to node N8. Node N7 is associated with the concept "birthday" and node N8 is associated with the concept "portrait".

If the image has been sent to node N4, the image is tested to determine if it is representative of animals. If yes, the image is sent to node N9, otherwise this image is transferred to node N10. Node N9 is associated with the concept "dogs" and node N10 is associated with the concept "abstract picture".

If the image has been sent to node N5, the image is tested to determine if it is representative of a seaside. If yes, the image is sent to node N11, otherwise this image is transferred to node N12. Node N11 is associated with the concept "beach" and node N12 is associated with the concept "mountain".

If the image has been sent to node N6, the image is tested to determine if it is representative of an outdoor scene. If yes, the image is sent to node N13, otherwise this image is transferred to node N14. Node N13 is associated with the concept "people" and node N14 is associated with the concept "abstract picture".

If the image has been sent to node N7, the image is tested to determine if it is representative of a birthday.

If the image has been sent to node N8, the image is tested to determine if it is representative of a portrait.

If the image has been sent to node N9, the image is tested to determine if it is representative of a dog.

If the image has been sent to node N10, the image is tested to determine if it is representative of an abstract picture.

If the image has been sent to node N11, the image is tested to determine if it is representative of a beach. If yes, the image is sent to node N15, otherwise this image is transferred to node N16. Node N15 is associated with the concept "people" and node N16 is associated with the concept "sailing scene".

If the image has been sent to node N12, the image is tested to determine if it is representative of a mountain. If yes, the image is sent to node N17, otherwise this image is transferred to node N18. Node N17 is associated with the concept "mountain with snow" and node N18 is associated with the concept "country".

If the image has been sent to node N13, the image is tested to determine if it is representative of a people. If yes, the image is sent to node N19, otherwise this image is transferred to node N20. Node N19 is associated with the concept "party scene" and node N20 is associated with the concept "animals".

If the image has been sent to node N14, the image is tested to determine if it is representative of an abstract picture. If yes, the image is sent to node N21, otherwise this image is transferred to node N22. Node N21 is associated with the concept "painting" and node N22 is associated with the concept "people".

If the image has been sent to node N15, the image is tested to determine if it is representative of a people scene.

If the image has been sent to node N16, the image is tested to determine if it is representative of a sailing scene.

If the image has been sent to node N17, the image is tested to determine if it is representative of a mountain with snow.

If the image has been sent to node N18, the image is tested to determine if it is representative of a country.

If the image has been sent to node N19, the image is tested to determine if it is representative of a party scene.

If the image has been sent to node N20, the image is tested to determine if it is representative of animals.

If the image has been sent to node N21, the image is tested to determine if it is representative of a painting.

If the image has been sent to node N22, the image is tested to determine if it is representative of people.

The invention proposes therefore a method to determine which graph gives the best performance for the classification of the multimedia elements and particularly for the classification of images. However, the invention is not limited to images. The invention can also concern for instance music and therefore the associated concepts are linked to music such as for instance the mood, the speed, the rhythm and the spectrum.

In order to classify the images, once the graph has been applied to an image, metadata corresponding to the different concepts for which the image answered positively are associated with the image.

For instance, an image representing a people in a boat, for which graph of figure 1 a is applied to, has for metadata:

- landscape
- Seaside
- beach
- sailing scene

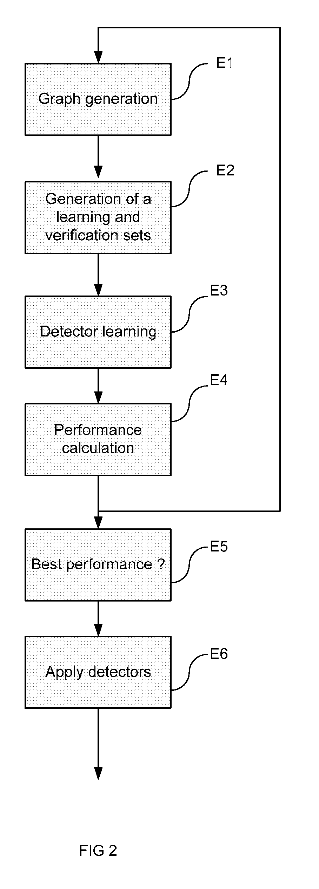

<u>Description figure 2</u>

In a step E1, a graph is established for a number M of concepts $C_m$, $0 \leq m \leq M$. We assume that M is higher than 1. Such graphs are shown on figures 1a and 1b.

In order to build the graph, one of the concepts is chosen for being the master node. The master node has the level $N_i$ where i=0 indicates the highest level, the master node has thus the level $N_0$.

The concept associated with the master node is of type $C^i$ with i=0. Whenever a concept is chosen for a node, a random choice without repetition will be applied for the next nodes. This means that once a concept has been chosen, it is no more considered for the establishment of the other nodes in the same branch.

The index level i is then incremented to generate the next level of the graph.

A new concept $C^i$ is chosen from the remaining concepts.

For each node of level Ni, two cases are distinguished using given semantic relationships:

a. Ci is semantically compatible to all concept decisions between the master node and the node of level Ni.

The node of level Ni is created with the concept Ci associated.

b. Ci is semantically contradictory to at least one concept decision between the master node and the node of level Ni.

The node of level Ni is created as empty nodes without any detector or concept associated.

The graph is built when all the concepts are associated with a node and the steps given above are repeated until it is the case.

In a step E2, once the graph is built, a global learning set is created.

For each node of the graph, a positive and a negative learning sets are created manually, these learning sets being sub-learning sets of the global learning set.

In order to create the learning set, the graph is scanned, level by level.

The learning sets for a node are chosen such that they semantically correspond to all concept decisions between the master node and the concerned node. To enable the learning set building, each image of the global learning set has metadata associated containing information of present and/or absent concepts.

A verification set is also created using the same method as for the creation of the learning set.

The verification set and the learning set do not contain the same data at all.

In a step E3, once the learning sets and the verification sets are created, the detectors, enabling to detect the presence or the absence of a concept in an image of the database, are determined, thanks to the content of the images of the learning set.

The determination of a detector can include the choice of image descriptors to be used, the choice of image feature compression, the choice of a classification method and the learning of the classification method using the learning set. Some of these choices can be predefined manually; some of these choices can be made by optimization using the classification error of the verification set as criterion.

For each image of the learning set, several descriptors are calculated using known methods. Descriptors can be representative of characteristics such as color histogram, dominant color, color layouts, texture descriptors, contour direction histograms, or other types of descriptors. A vector is calculated from this set of descriptors, using known methods. Said vector being called the descriptor associated with the image.

The negative learning set associated with a node comprises thus a set of images, each image being associated with a descriptor.

The positive learning set associated with a node comprises thus a set of images, each image being associated with a descriptor.

For instance, in node N2, the detector is: "is this scene representing an indoor scene or not ?".

In order to decide if the answer to this question is "yes" or "no", a comparison is done.

For this, a number of vectors associated with the positive learning set is chosen and a number of vectors associated with the negative learning set is chosen. The vectors chosen in each category are representative of the category. The representative vectors are determined for example by a k-means algorithm. The choice of representative vectors aims in reducing the number of involved vectors. In other embodiments, the representative vectors can be chosen according to other methods.

For each node, $v_j^{pos}$ represent the $J^{pos}$ representative vectors of the positive learning set, with $0 \leq j < J^{pos}$

and $v_k^{neg}$ represent the $K^{neg}$ representative vectors of the negative learning set, with $0 \leq k < k^{neg}$

In a step E4, a performance of the graph is calculated, using the images of the verification set and their associated metadata.

A descriptor vector is calculated for each image of the verification set, according to the same method as calculated for the images of the learning set.

The descriptor vector of each verification image is compared to the descriptor vector associated with the positive learning set and with the descriptor vector associated with the negative learning set for each detector.

If the descriptor vector of the current image of the verification set is closer to one of the positive vectors, the current image will be classified as belonging to the positive verification set.

If the descriptor vector of the current image of the verification set is closer to one of the negative vectors, the current image will be classified as belonging to the negative verification set.

Therefore, according to the classification obtained, the image will follow one branch of the graph, being detected for each node as belonging either to the positive branch or to the negative branch.

A comparison can be made between the obtained concept decisions and the ground truth information in the metadata of the image on this concept.

Then, the next detector, either on the negative branch or on the positive branch, according to the result of the comparison, will be applied.

Once all images have been tested, one calculates the performance of the graph to detect if the current graph classifies automatically the images as the ground truth.

For each node, a set of markers is calculated:

$k_{POS}^{POS}$ the number of positive detections among images from positive verification set,

$k_{POS}^{NEG}$ the number of negative detections among images from positive verification set,

$k_{NEG}^{POS}$ the number of positive detections among images from negative verification set and

$k_{NEG}^{NEG}$ the number of negative detections among images from negative verification set.

A positive detection means that the automatic classification matches the ground truth; a negative detection means a mismatch.

Then a recall rate is calculated:

$$R = k_{POS}^{POS} / \left( k_{POS}^{POS} + k_{POS}^{NEG} \right).$$

According to another embodiment, a precision:

$$P = k_{POS}^{POS} / \left( k_{POS}^{POS} + k_{NEG}^{POS} \right)$$

can also be calculated.

Then, a new graph is evaluated by changing the order of the nodes in the graph, therefore by first choosing another parent node such as illustrated on figures 1a and 1b. Each of the steps is carried out for the new graph and the performance is calculated for each graph.

The process, from steps E1 to step E4, is repeated a certain number of times. This number can depend on the performances obtained. It means that if the performance is very bad, the number of iterations can be increased. It can be based on a threshold for instance; if the performance is lower than a threshold, the graph is recalculated until the performance is higher than this threshold.

The number of iterations can also depend on a predetermined number fixed in advance, for instance 10 iterations.

In a step E5, the performances obtained for the different graphs are compared and the graph having the best performances is kept.

Such a graph is afterwards used for the classification of documents in a database.

**Claims**

1. Method for establishing a best graph for the classification of video data or audio data, the graph comprising a number of nodes, each associated with one concept, each data associated with metadata representing at least ground truth information associated with each concept, **characterized in that** it comprises the steps of

    - establishing a plurality of graphs by arranging the orders of the nodes differently in each graph,
    - classifying automatically each data in each graph,
    - determining a performance for each graph by comparing the ground truth information and the classification.

2. Method according to claim 1 **characterized in that** it further comprises the step of creating a detector for each node, enabling to detect the presence or the absence of the concept associated with said node,

3. Method according to claim 2 **characterized in that** it further comprises the steps of

    - creating a learning set of data for each node, each learning set comprises a positive learning set and negative learning set, the positive learning set comprising data comprising the concept and the negative learning set comprising data which do not comprise said concept,
    - creating a verification set of data for each node, comprising data distinct from the data of the learning set, each verification set comprises a positive verification set and negative verification set, the positive verification set comprising data comprising the concept and the negative verification set comprising data which do not comprise said concept,

4. Method according to one of the preceding claims **characterized in that** it comprises the steps of calculating for each data of the learning sets and of the verification sets, a descriptor representative of the content of the data and chosen among:

    - a color histogram,
    - a dominant color
    - textu re,
    - contour direction histograms,
    - rhythm,
    - mood,

    and a combination of any of these features.

5. Method according to claim 4 **characterized in that** it comprises a step of determining a set of representative descriptors for each learning set.

6. Method according to claim 5 **characterized in that** it comprises

    - a step of comparing, for each node, the descriptors of each data of the node associated verification set to the set of representative descriptors associated with the positive and negative learning set of said node.
    - a step of classifying each data as belonging to a positive verification set or to a negative verification set according to the comparison.

7. Method according to claim 6 **characterized in that** it comprises a step of evaluating the performance of each graph by comparing the classification obtained into positive and negative verification sets for each node and the ground truth information associated with each node.

E1 — Graph generation

E2 — Generation of a learning and verification sets

E3 — Detector learning

E4 — Performance calculation

E5 — Best performance ?

E6 — Apply detectors

FIG 2

FIG 1a

FIG 1b

European Patent
Office

**EUROPEAN SEARCH REPORT**

Application Number

EP 06 30 1219

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | MILIND RAMESH NAPHADE ET AL: "A Factor Graph Framework for Semantic Video Indexing" IEEE TRANSACTIONS ON CIRCUITS AND SYSTEMS FOR VIDEO TECHNOLOGY, IEEE SERVICE CENTER, PISCATAWAY, NJ, US, vol. 12, no. 1, January 2002 (2002-01), XP011014265 ISSN: 1051-8215 * the whole document * | 1-7 | INV. G06F17/30 |
| X | ADITYA VAILAYA ET AL: "Image Classification for Content-Based Indexing" IEEE TRANSACTIONS ON IMAGE PROCESSING, IEEE SERVICE CENTER, PISCATAWAY, NJ, US, vol. 10, no. 1, January 2001 (2001-01), XP011025726 ISSN: 1057-7149 * the whole document * | 1-7 | |
| D,X | VAILAYA A ET AL: "Content-based hierarchical classification of vacation images" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 June 1999 (1999-06-07), pages 518-523, XP010342784 ISBN: 0-7695-0253-9 * the whole document * | 1-7 | TECHNICAL FIELDS SEARCHED (IPC) G06F |

-/--

The present search report has been drawn up for all claims

| Place of search | Date of completion of the search | Examiner |
|---|---|---|
| The Hague | 19 April 2007 | Dumitrescu, Cristina |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

**European Patent Office**

## EUROPEAN SEARCH REPORT

Application Number

EP 06 30 1219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | K.RODDEN: "How Do People Organise Their Papers?" 21ST BCS IRSG COLLOQUIUM ON IR, [Online] 1999, pages 1-10, XP002430118 Glasgow Retrieved from the Internet: URL:http://citeseer.ist.psu.edu/cache/pape rs/cs/16139/http:zSzzSzwww.cl.cam.ac.ukzSz ˜kr205zSzirsg.pdf/rodden99how.pdf> [retrieved on 2007-04-19] * the whole document * | 1-7 | |
| A | US 5 745 893 A (HILL JOE R [US] ET AL) 28 April 1998 (1998-04-28) * abstract * | 1-7 | |
| | | | **TECHNICAL FIELDS SEARCHED (IPC)** |

The present search report has been drawn up for all claims

| Place of search | Date of completion of the search | Examiner |
|---|---|---|
| The Hague | 19 April 2007 | Dumitrescu, Cristina |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

............................................................................

& : member of the same patent family, corresponding
  document

EPO FORM 1503 03.82 (P04C01)

EP 1 930 815 A1

## ANNEX TO THE EUROPEAN SEARCH REPORT
## ON EUROPEAN PATENT APPLICATION NO.

EP 06 30 1219

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2007

| Patent document cited in search report | Publication date | Patent family member(s) | Publication date |
|---|---|---|---|
| US 5745893 A | 28-04-1998 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. RODDEN.** How do people organize their photographs. *BCS IRSG 21st Annual Colloquium on Information Retrieval Research,* 1999

- **A. VAILAYA et al.** Content-based hierarchical classification of vacation images. *Proceedings of the IEEE international conference on Multimedia Computing and Systems,* 1999